# EUROPÄISCHE PATENTSCHRIFT

(11) **EP 4 168 334 B1**
(45) Veröffentlichungstag und Bekanntmachung des Hinweises auf die Patenterteilung: **17.04.2024**
(21) Anmeldenummer: 22731176.8
(22) Anmeldetag: 30.05.2022
(51) Int. Cl.: B65G 47/61, B65G 17/20, B65G 19/02, B65G 17/32

(54) **TRANSPORTTASCHE ZUM HÄNGENDEN TRANSPORT VON FÖRDERGUT SOWIE BELADESTATION UND FÖRDERANLAGE DIESER TRANSPORTTASCHEN**
TRANSPORT BAG FOR SUSPENDED TRANSPORT OF MATERIAL TO BE CONVEYED, AND LOADING STATION AND CONVEYOR SYSTEM FOR THESE TRANSPORT BAGS
SAC DE TRANSPORT POUR TRANSPORT SUSPENDU DE MATIÈRE À TRANSPORTER, ET POSTE DE CHARGEMENT ET SYSTÈME DE TRANSPORT POUR CES SACS DE TRANSPORT

(30) Priorität: 02.06.2021 DE 102021002833
(43) Veröffentlichungstag der Anmeldung: 26.04.2023
(73) Patentinhaber: SSI Schäfer Automation GmbH (AT), 8051 Graz (AT)
(72) Erfinder: JANZEN, Paul, 33619 Bielefeld (DE)
(74) Vertreter: Witte, Weller & Partner Patentanwälte mbB
(86) Internationale Anmeldenummer: PCT/EP2022/064644
(87) Internationale Veröffentlichungsnummer: WO 2022/253772

(56) Entgegenhaltungen:
- EP-A1- 3 782 936
- WO-A1-2018/078098
- AT-A4- 522 067
- AT-B1- 522 067
- DE-A1-102017 201 919
- DE-A1-102018 201 541
- DE-U1-202016 008 366
- US-A1- 2018 086 563
- US-A1- 2019 291 968

## Beschreibung

Die Erfindung betrifft eine Transporttasche zum hängenden Transport von Fördergut nach dem Oberbegriff des Anspruchs 1. Ferner betrifft die Erfindung eine Beladestation mit derartige Transporttaschen sowie eine Förderanlage mit derartige Transporttaschen.

Aus der DE 10 2004 018 569 B4 ist eine Förderanlage mit Tragetaschen bekannt. Die Tragetaschen bestehen aus einer Hinterwand, einer Vorderwand, Seitenwänden und einem Boden und werden mittels eines Trage-Hakens in einem Mitnehmer der Förderanlage eingehängt. Die oberen Ränder sind mittels eines rechteckigen Tragerahmens miteinander verbunden. Zum Öffnen einer durch den Tragrahmen begrenzten Beschickungsöffnung sind am Tragrahmen angebrachte Vorsprünge vorgesehen, die an einer Beschickungsstation über eine Schiene geführt werden, die den Tragrahmen in eine angenähert waagerechte Position bringt, sodass die Beschickungsöffnung geöffnet wird. Nachteilig bei dieser Tragetasche ist das Einbringen des Förderguts von der Seite.

Aus der EP 2 130 968 B1_ist eine Förderanlage bekannt, bei der Tragetaschen mittels Trage-Haken in einem Mitnehmer einer Förderanlage eingehängt werden. Die Tragetaschen weisen eine Hinterwand und eine Vorderwand mit einem Boden auf, der mittels einer lösbaren Kupplung an der Hinterwand angebracht ist. Am oberen Rand sind die Hinterwand und die Vorderwand mittels eines rechteckigen Tragrahmens miteinander verbunden, der seitlich Vorsprünge aufweist. An einer Beladestation laufen diese Vorsprünge auf eine Schiene auf, sodass der Tragrahmen hochgeschwenkt wird, wodurch eine Beschickungsöffnung geöffnet wird. Zum Entladen wird die untere Kupplung geöffnet, sodass ein Fördergut nach unten herausfallen kann.

Nachteilig ist, dass die Tragetasche keine Seitenwände aufweist und dass das Fördergut rausfallen kann. Außerdem ist eine sehr aufwendige Beladestation nötig und die Verbindung der Mitnehmer der Förderanlage mit der Tragetasche ist nicht sicher gewährleistet.

Aus der EP 2 418 160 B1 ist eine Förderanlage mit Tragetaschen für Fördergut bekannt, mit an einer Förderschiene in einer Förderrichtung bewegten Mitnehmern zur Aufnahme der Tragetaschen. Das Fördergut ist in einem Taschenbeutel mit schmalen und breiten Seitenwänden aufnehmbar, wobei in einer der breiten Seitenwänden ein Beschickungsfenster ausgebildet ist. Die Tragetasche ist mittels einer Kupplung von einer stabilen Drehlage mit quer zu der Förderrichtung befindlichem geschlossenen Beschickungsfenster in eine instabile Drehlage mit dem parallel zu der Förderrichtung befindlichem geschlossenen Beschickungsfenster in eine instabile Drehlage mit dem parallel zu der Förderrichtung befindlichen Beschickungsfenster in einen geöffneten Zustand einstellbar und es wird eine unbeeinträchtigte Handhabung des Förderguts zum Beladen oder Entleeren der Tragetasche ermöglicht.

Aus der DE 10 2011 101 987 A1 ist eine Transporttasche bekannt zur Beförderung eines Fördergutes in einer Förderanlage, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel eine Verschlussklappe aufweist, die eine Handhabungslasche mit einem Klemmabschnitt aufweist, wobei das Trägerteil eine Klemmeinrichtung mit einem Klemmhebel aufweist, der zwischen einer Haltestellung, in der eine Haltekraft auf den Klemmabschnitt einwirkt, und einer Freigabestellung verlagerbar ist, und wobei der Klemmhebel in der Haltestellung derart mit dem Klemmabschnitt gekoppelt ist, dass das aufgenommene Fördergut durch sein Gewicht eine Erhöhung der Haltekraft bewirkt. Nachteilig ist das aufwendige Beladen und Schließen der Transporttasche. Außerdem kann die Transporttasche beim Pendeln aus der Förderanlage rausfallen.

Aus der EP 2 708 478 B1 ist eine Transporttasche bekannt für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden und der Taschenbeutel einen ersten und einen zweiten Beutelabschnitt aufweist, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann. Nachteilig ist das aufwendige Beladen und Entladen der Transporttasche. Außerdem kann die Transporttasche beim Pendeln aus der Förderanlage rausfallen.

Die US 2018 086 563 A1 betrifft eine Transporttasche für eine Hängebahn gemäß dem Oberbegriff des Anspruchs 1, die eine vordere Seitenwand, eine hintere Seitenwand und eine die vordere Seitenwand mit der hinteren Seitenwand verbindende Bodenwand umfasst, wobei an einer Außenseite der Front und/oder an einer Außenseite der hinteren Seitenwand zumindest teilweise eine haftende Kontaktfläche vorgesehen ist, um ein seitliches Verschieben zweier aneinanderstoßender Transporttaschen zu verhindern.

Gemäß ihrer Zusammenfassung betrifft die AT 522 067 A4 einen Transportträger und ein Transportträgersystem für eine Hängefördereinrichtung, bei dem der Transportträger einen universell einsetzbaren Grundkörper und über eine Verbindungseinrichtung auswechselbaren Tragkörpern umfasst, welcher in einer ersten Konfiguration mit einer vollständig umschlossenen Aufnahmeöffnung zum Transport von Transporttaschen und in einer zweiten Konfiguration mit einem Aufhängehaken zum Transport von auf Kleiderbügel hängender Ware versehen ist.

Gemäß ihrer Zusammenfassung betrifft die DE 10 2017 201 919 A1 eine Hängetasche mit einem Hängerahmen zum Anhängen der Hängetasche in einer Transportstellung an ein Transportleitelement einer Hängefördereinrichtung, wobei der Hängerahmen zwei von einem oberen Trägerabschnitt nach unten verlaufende Randabschnitte aufweist, einem Schwenkrahmen, einer im Bereich der Randabschnitte des Hängerahmens angeordneten Drehgelenkanordnung, mittels welcher der Schwenkrahmen schwenkbeweglich um eine Schwenkachse an dem Hängerahmen gelagert ist, einer an dem Schwenkrahmen vorgesehenen und davon eingefassten ersten Taschenseitenwand und einer mit dem Trägerabschnitt und dem Schwenkrahmen verbundenen zweiten Taschenseitenwand, wobei die beiden Taschenseitenwände einen Förderergutaufnahmebereich zwischen sich begrenzen und durch Verschwenken des Schwenkrahmens auseinanderklappbar und zusammenklappbar sind, wobei der Grundschwenkrahmen eine stabile Schwenkstellung an dem Hängerahmen aufweist, wobei eine Schwenkbetätigungseinrichtung, mittels welcher der Schwenkrahmen aus seiner stabilen Schwenkstellung herausbewegbar ist, ein Verdrängungselement aufweist, welches aus einer Normalposition verdrängt wird, wenn von einer Störkontur beaufschlagt wird, wobei es je nach Grad der Verdrängung den Schwenkrahmen relativ zum Hängerahmen verschwenkt, um die Hängetasche entsprechend weit zu öffnen.

Gemäß ihrer Zusammenfassung betrifft die DE 10 2018 201 541 A eine Förderanlage umfassend mehrere eine Förderkette zum Fördern von Hängeware bildende Förderelemente, wobei die Förderkette entlang einer Förderstrecke verläuft. Die Förderanlage umfasst mehrere entlang einer Führung bewegliche und auf der Führung gelagerte Hängeelemente, wobei die Führung zumindest abschnittsweise parallel zur Förderstrecke verläuft, wobei die Hängeelemente einen Angriffsabschnitt aufweisen, der dazu ausgebildet ist, jeweils eines der Förderelemente zu kontaktieren, um eine entlang der Führung gerichtete Antriebskraft des Förderelements aufzunehmen. Erfindungsgemäß ist der Angriffsabschnitt der Hängeelemente zwischen einer Förderstellung und einer Staustellung kippbar, wobei der Angriffsabschnitt in der Förderstellung aufgerichtet ist, um die Antriebskraft aufzunehmen, und in der Staustellung weggekippt ist, um der Antriebskraft auszuweichen, und wobei der Angriffsabschnitt in seine Förderstellung drängt. Die bekannten Transporttaschen zum hängenden Transport und die Förderanlagen für die Transporttaschen erfordern aufwendige Beladestationen, sind nicht energieeffizient genug, teilweise lautstark und mit vielen zusätzlichen Sicherheits-Systemen ausgestattet, um Betriebsausfälle zu vermeiden.

Der Erfindung liegt die Aufgabe zugrunde, die gattungsgemäße Transporttasche derart weiterzubilden, dass eine exakt zueinander abgestimmte energieeffiziente, betriebssichere, geräuscharme, mit wenigen Teilen aufgebaute, verschleißarme Transporttasche und Förderanlage für die Transporttasche zum Beladen, Sortieren, Entladen, Aufstauen und Lagern der Transporttasche entsteht. Diese Aufgabe wird erfindungsgemäß durch die Merkmale im Kennzeichnungsteil des Anspruchs 1 gelöst

Weitere Merkmale, Vorteile und Einzelheiten der Erfindung ergeben sich aus der folgenden Beschreibung von Ausführungen und Beispielen anhand der Zeichnungen.

Es wird dargestellt:
- Fig. 1: eine perspektivische Rückansicht eines Rollfahrwerks,
- Fig. 2: eine Seitenansicht des Rollfahrwerks,
- Fig. 3: eine Seitenansicht einer Transporttasche,
- Fig. 4: eine perspektivische Rückansicht der Transporttasche,
- Fig. 5: eine Seitenansicht von Transporttaschen in einer Förderanlage mit einem Förderelement,
- Fig. 6: eine Vorderansicht eines Fragments der Transporttasche in der Förderanlage mit einem Förderelement,
- Fig. 7: eine Seitenansicht der leeren Transporttaschen in der Förderanlage auf einer Staustrecke mit einem Anhalter,
- Fig. 8: eine Vorderansicht eines Fragments der Transporttasche in der Förderanlage auf einer Staustrecke mit einem Anhalter,
- Fig. 9: eine Vorderansicht des Rollfahrwerks mit der Halteplatte im Pendeln,
- Fig. 10: eine Seitenansicht im Schnitt des Rollfahrwerks mit der Halteplatte im Pendeln,
- Fig. 11: eine perspektivische Rückansicht des Rollfahrwerks mit den eingehängten Gegenständen,
- Fig. 12: eine Vorderansicht des Rollfahrwerks mit der Halteplatte in Rotationsbewegung,
- Fig. 13: eine Draufsicht im Schnitt des Rollfahrwerks mit der Halteplatte in Rotationsbewegung,
- Fig. 14: eine Seitenansicht im Schnitt der Transporttaschen in einem Steilförderer beim Hochfahren,
- Fig. 15: eine Seitenansicht im Schnitt der Transporttaschen im Steilförderer beim Runterfahren,
- Fig.: 16eine perspektivische Vorderansicht der Beladestation mit den Transporttaschen,
- Fig.: 17eine perspektivische Rückansicht der Beladestation mit den Transporttaschen,
- Fig. 18: eine perspektivische Seitenansicht im Schnitt einer Querförderung der Transporttaschen,
- Fig. 19: eine Vorderansicht der Querförderung der Transporttasche,
- Fig.: 20eine Seitenansicht einer Beladestation mit einem Transportband,
- Fig. 21: eine perspektivische Vorderansicht von Quertransport-Weichen für die Transporttaschen,
- Fig. 22: eine perspektivische Draufsicht der Quertransport-Weichen für die Transporttaschen,
- Fig. 23: eine Vorderansicht im Schnitt der Querförderung der Transporttasche auf Gleitflächen,
- Fig. 24: eine Unteransicht einer Bogenwinkel-Weiche für die Transporttaschen mit einer linear geschalteten Weichenzunge ,
- Fig. 25: eine Unteransicht der Bogenwinkel-Weiche für die Transporttaschen mit der im Bogenwinkel geschalteten Weichenzunge ,
- Fig. 26: eine perspektivische Seitenansicht der Bogenwinkel-Weiche für die Transporttaschen,
- Fig. 27: eine perspektivische Seitenansicht eines Grundkörpers der Bogenwinkel-Weiche,
- Fig. 28: eine perspektivische Seitenansicht der Weichenzunge.

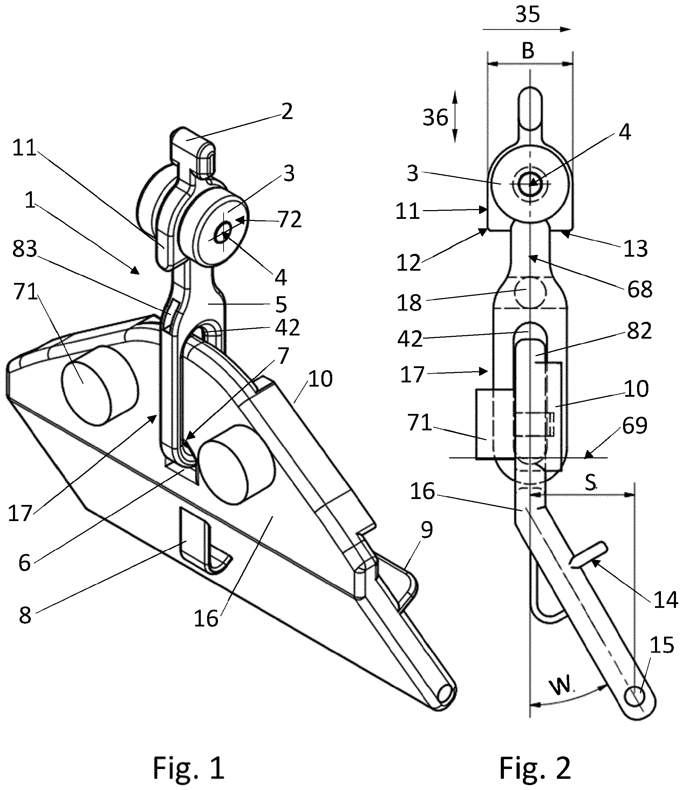

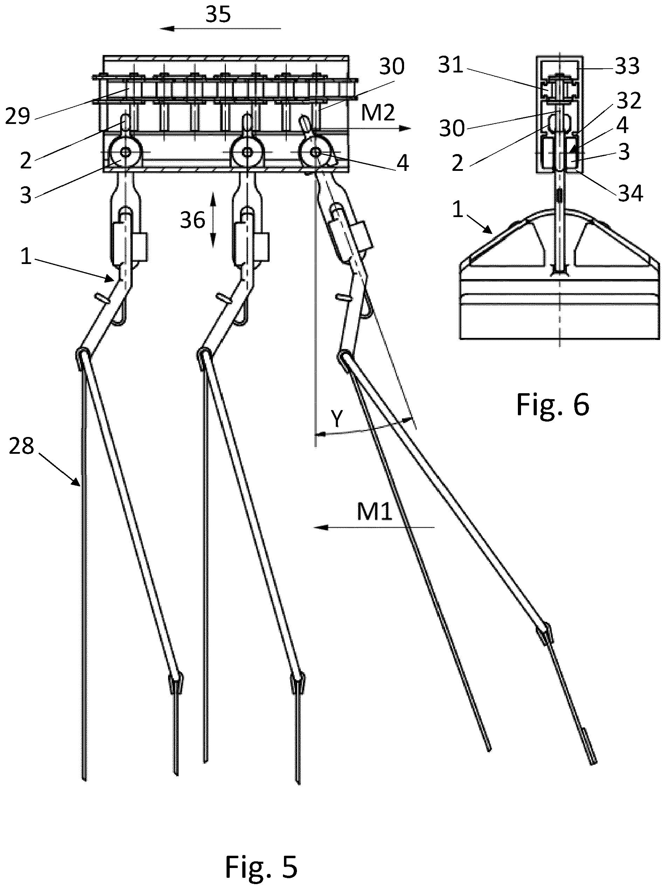

Fig. 1 und 2 zeigen ein Rollfahrwerk 1 das nur zwei Rollen 3 enthält, auf welchen es pendelnd in der Transportschiene 33 (Fig. 5) gelagert wird. Das Rollfahrwerk 1 beinhaltet einen Grundkörper 5 mit den im oberen Bereich eingebauten Rollen 3 und eine Halteplatte 16 mit Befestigungmitteln 15 für den Beladerahmen 19. Der Grundkörper 5 hat oberhalb der Rollen 3 eine obere Kupplung 2 zum Übertragen einer Antriebskraft (Fig. 5) durch Mitnehmer 30 des Förderelements 29. Der Grundkörper 5 und die Halteplatte 16 sind mit einem technischen Gelenk 17 verbunden. Das technischen Gelenk 17 wird gebildet durch eine Gelenkfassung 42 in Form eines Langlochs im Grundkörper 5 und ein Gelenkelement 82 der Halteplatte 16, wobei die Gelenkfassung 42 das Gelenkelement 82 umgreift und wobei das Gelenkelement 82 durch eine Öse 6 der Halteplatte 6 gebildet wird. Das technische Gelenk 17 beinhaltet eine Drehachse (68) und eine Schwenkachse (69).

Entlang der Ebene durch die Achse 4 und die Drehachse 68 beinhaltet das technische Gelenk 17 keine Schwenkachse 69, sodass beim Pendeln des Rollfahrwerks 1 um die Achse 4 der Grundkörper 5 und die Halteplatte 16 im Wesentlichen wie fest verbunden wirken und durch das Eigengewicht des Rollfahrwerks 1 ein maximal mögliches Drehmoment beim Pendeln um die Achse 4 erzeugt wird. Der Grundkörper 5 beinhaltet Gleitflächen 13 zum Quertransport im scharfen Winkel zu der Rollbewegung und untere Kupplungen 12 für den Transport auf Steigungen bis mindestens 65°. Die Halteplatte 16 ist winkelartig in einer Förderrichtung 35 ausgebildet und weist gegenüber der Ebene durch die Achse 4 und die Drehachse 68 einen Winkel W von 10° bis 45°, vorzugsweise von 25° bis 35°, auf. Die Halteplatte 16 enthält eine Führung 9 zum Quertransport in der Beladestation 50, Schalldämmungsmittel 71 und Anschlagflächen 10 für die Schalldämmungsmittel 71. Der Grundkörper 5 und die Halteplatte 16 bestehen vorzugsweise aus Kunststoff, besonders bevorzugt aus Kohlenstofffaserverstärkten Polyamid, und die Rollen 3 umfassen vorzugsweise Leichtlauf-Kugellager mit einer Bandage aus Kunststoff, welcher vorzugsweise POM darstellt. Im Grundkörper 5 befindet sich in der Fassung 83 ein Datenträger 18, welcher vorzugsweise ein beschreibbarer Chip ist.

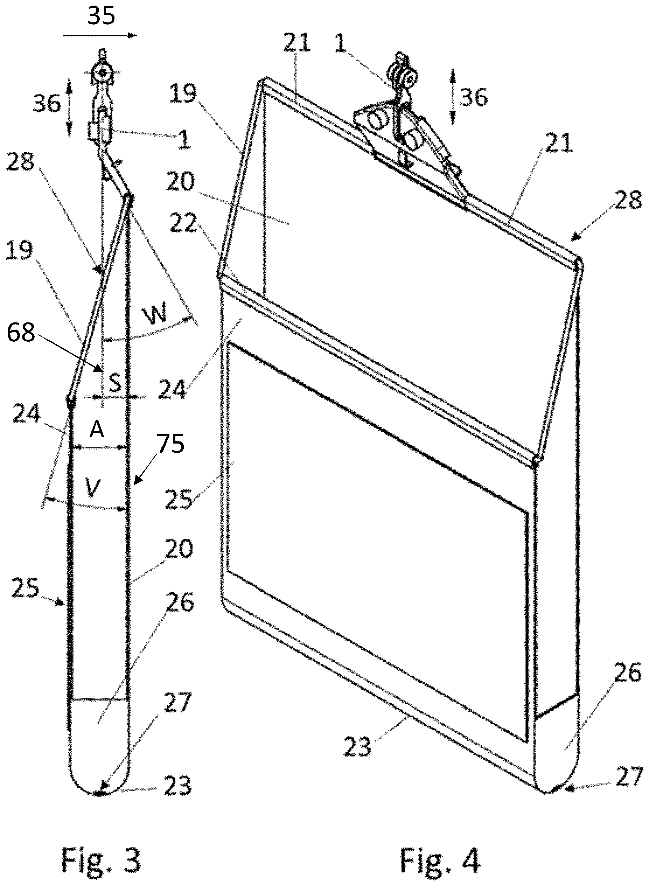

In den Fig. 3 und 4 ist eine Transporttasche 28 abgebildet, bestehend aus einem Rollfahrwerk 1 und einem mit dem Rollfahrwerk 1 verbundenen Beladerahmen 19. Der Beladerahmen 19 ist rechteckig ausgebildet und besteht vorzugsweise aus einem Metalldraht. Der Beladerahmen 19 ist in die Halteplatte 16 fest und nicht drehbar mit einem Winkel V zum Grundkörper um die Ebene durch die Achse 4 und die Drehachse 68 von 5° bis 45°, vorzugsweise von 10° bis 30° und besonders bevorzugt von 12° bis 20°, eingebaut, der gegengerichtet zum Winkel W ist. Die entstehende Tiefe A zwischen der Vorderwand 20 und Rückwand 24 der Transporttasche 28 enthält im Wesentlichem ein Maß von 2S, sodass der Grundkörper 5 eine im Wesentlichem vertikale 36 Position einnimmt und die Tiefe A der Transporttasche 28 ein Maß von 20 bis 150 mm, vorzugsweise von 40 bis 80 mm, besonders bevorzugt von 55 bis 70 mm, aufweist und eine manuelle Entladung der Transporttaschen 28 ermöglicht. Auf dem Beladerahmen 19 ist die in Förderrichtung 35 faltbare Tragwand 75 mithilfe von Säumen auf den Querstangen des Beladerahmens 19 befestigt und die Säume beinhalten ein Öffnungsmaß ausreichend zum Draufziehen auf den Beladerahmen 19, vorzugsweise ein Maß von 20 bis 50 mm. Anschließend werden die Säume mit Schutzleisten 21,22 verkleidet und so gegen Schläge gesichert. Die Tragwand 75 besteht aus einer Vorderwand 20, einer Rückwand 24, auf welcher eine Versteifungsplatte 25 befestigt ist, einer Bodenwand 23 und Seitenwänden 26. Die Tragwand 75 der Transporttasche 28 ist zumindest teilweise, vorzugsweise die komplette Tragwand 75, aus flexiblem Stoff gebildet, und weist von außen eine Beschichtung mit maximal möglich niedrigen Gleitwerten zur Verhinderung der seitlichen Verschiebung der Transportaschen 28 im gestauten Zustand auf. Der Stoff ist schwer entflammbar und insbesondere halogenfrei gebildet, besteht mindestens 50000 Scheuertouren und hat eine Farbfestigkeit im inneren Bereich der Tragwand 75, die ausreichend ist, um das Verfärben des transportierten Förderguts 53, insbesondere der Textilien beim längeren Lagern, von mindestens 30 Tagen und bei Temperaturen bis zu 50° C, zu verhindern.

Die Förderanlage gemäß Fig. 5 und 6 weist vorzugsweise eine aus Aluminium gefertigte Transportschiene 33 mit einem kastenförmigen und symmetrisch ausgebildeten Querschnitt mit Förderelementführungen 31, mit den oberen Begrenzungsstegen 32 für die Rollen 3 und den Laufstegen 34 für das Rollfahrwerk 1 auf. Die Förderelementführungen 31 nehmen mit ihren zugewandten rechteckigen Enden zwischen sich ein Trum eines endloses Förderelements 29 auf. Das Förderelement 29 ist mittels eines nicht dargestellten Elektromotors umlaufend antreibbar. Der Elektromotor weist eine Beschleunigungsrampe und Bremsrampe zur Verringerung der Axialverschiebungen und der dadurch entstehenden Kräfte auf. Das Förderelement 29, wie aus Fig. 5 und 6 entnehmbar, weist vorzugsweise eine kostengünstige handelsübliche Rollenkette mit um die Achsen schwenkbaren Gelenken auf. An der Unterseite beinhaltet die Rollenkette die Mitnehmer 30 in Pinform. Unterhalb der Rollenkette befinden sich in der Transportschiene 33 die in Förderrichtung 35 angetriebenen Transportaschen 28. Bei dem dynamischen Druck der Mittnehmer 30 auf die obere Kupplung 2 durch das Beschleunigen und Abbremsen des Förderelements 29 steht die Transporttasche 28 unter einem Winkel Y, welcher nicht überschritten werden darf, um eine sicherere Mitnahme der Transporttasche 28 zu gewährleisten. Dies wird erreicht durch den Aufbau des Rollfahrwerks 1 (siehe Beschreibung Fig. 1 und2) und mit dem fest und nicht drehbar eingebautem Beladerahmen 19, wodurch die Transporttasche 28 ein wesentlich größeres Drehmoment M1, gegenüber dem Antriebsdrehmoment M2, um die Achse 4 zum Verhindern des Überschreitens der maximal zulässigen Neigung (Y) der oberen Kupplung 2 zu der Vertikale 36 und des Auseinandergreifens der Mittnehmer 30 des Förderelementes 29 und der oberen Kupplungen 2 des Rollfahrwerks 1, erzeugt, sodass eine sicherere Mitnahme der Transporttasche 28 entsteht.

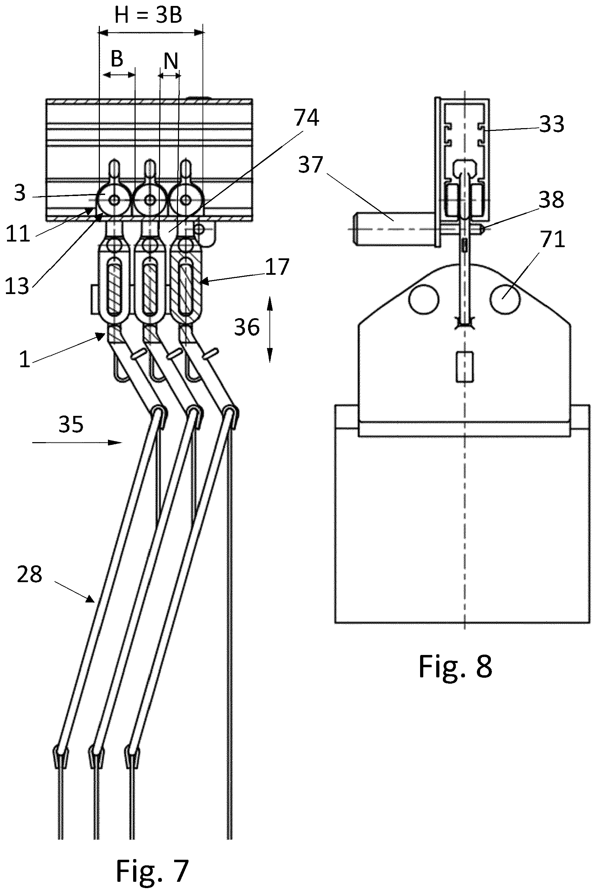

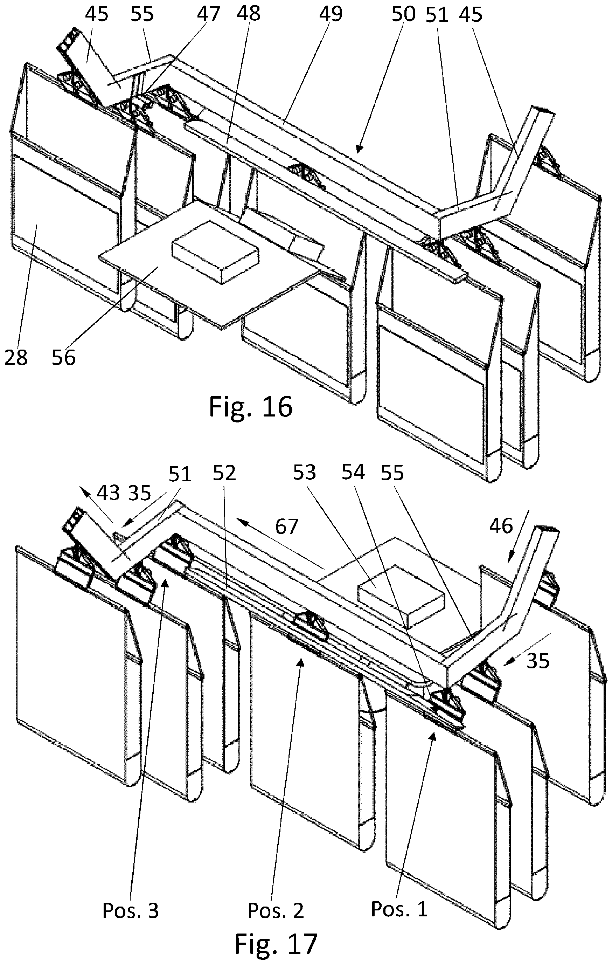

Gemäß Fig. 7 und 8 ist eine Förderanlage beim Aufstauen der leeren Transporttaschen 28 gezeigt. Die Transporttaschen 28 werden mit einem Anhalter 37 oder mit einer Vereinzelung 47 gemäß Fig. 16 angehalten und fahren zusammen, wobei sie sich in Förderrichtung 35 falten und so die maximale Dichte zueinander mit einer Gesamttiefe H erzeugen. Das Rollfahrwerk 1 hat im Rollenbereich 11 ein Maß B größer als der Rollendurchmesser, vorzugsweise von 0,5 bis 3 mm, besonders bevorzugt von 1,5 bis 2 mm, und das Maß B bildet im Wesentlichem die maximale Tiefe einer leeren, in Förderrichtung 35 gefalteten Transporttasche 28, wobei es vorzugsweise größer ist, sodass beim Aufstauen der leeren Transportaschen 28 die Gesamttiefe ein Maß von H = B x Zahl der Transportaschen 28 nicht überschreitet. Die Breite N unter den Gleitflächen 13 bildet eine Öffnung 74 aus, ausreichend zum Hineinragen eines Stoppelements 38 der Vereinzelung 47 oder des Anhalters 37, um leere oder beladene Transporttaschen 28 zu sortieren.

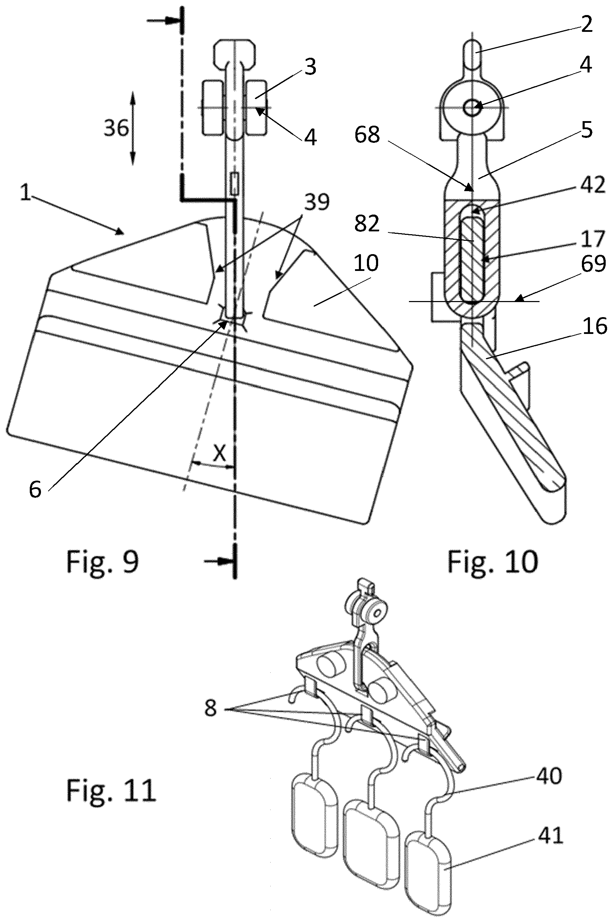

Gemäß Fig. 9 und 10 ist das Rollfahrwerk 1 bei dem Pendeln um die Schwenkachse 69 des technischen Gelenks 17 gezeigt. Der Grundkörper 5 und die Halteplatte 16 sind mit einem technischen Gelenk 17 verbunden, sodass die Halteplatte 16 um die Schwenkachse 69 um einen Winkel X in dem Grundkörper 5 pendeln kann und so beim Transport die Übertragung der entstehenden dynamischen Kräfte auf den Grundkörper 5 und insbesondere auf die Rollen 3 verhindert. Gleichzeitig bleibt die Stabilität des Rollfahrwerks 1 beim Pendeln um die Achse 4 erhalten und die Transporttasche 28 erzeugt ein maximal mögliches Drehmoment M1. Für die Begrenzung des Winkels X sind die Anschläge 39 vorgesehen.

Mit den Ösen 8, wie auf Fig. 11 dargestellt, besteht die Möglichkeit bei Bedarf mit einem Haken 40 zusätzliche Gegenstände 41 oder Datenträger mit der Transporttasche 28 zu fördern.

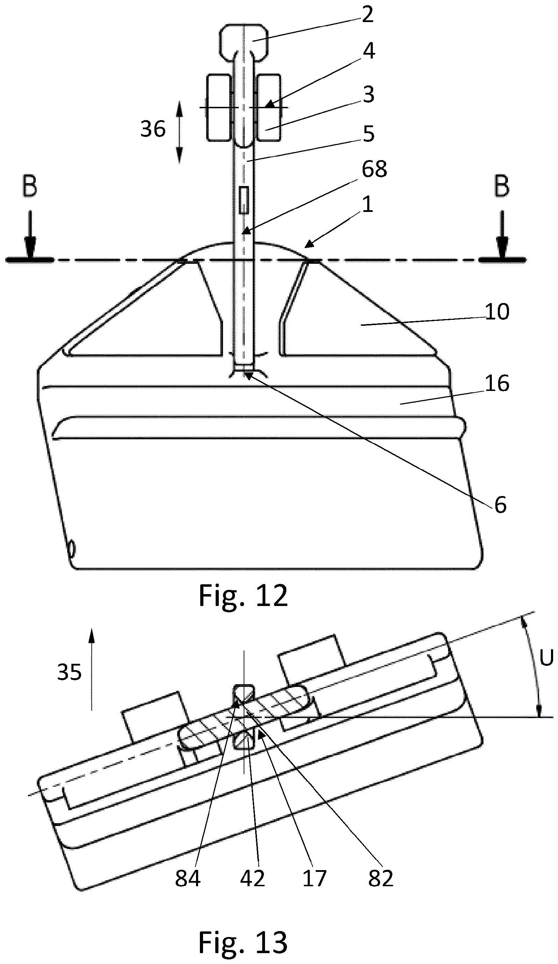

Gemäß Fig. 12 und 13 ist das Rollfahrwerk 1 bei der Rotationsbewegung um die Drehachse 68 gezeigt, welche beim Bremsen oder Beschleunigen als Folge der dynamischen Axialverschiebungen entsteht. Um diese Kräfte zu entlasten und die Übertragung auf den Grundkörper 5 und insbesondere auf die Rollen 3 zu vermeiden, sind die Kanten der Gelenkfassung 42 angefast oder abgerundet und die Halteplatte 16 kann mit dem Gelenkelement 82 um die Drehachse 68 um einen Winkel U rotieren und so beim Transport die Übertragung der entstehenden dynamischen Kräfte auf den Grundkörper 5 und die Rollen 3 verhindern. Gleichzeitig wird die Rotationsbewegung der Halteplatte 16 mit den Anschlägen 84 des Grundkörpers 5 auf einen Rotationswinkel U von 10° bis 45°, vorzugsweise von 15° bis 35°, begrenzt. Im Ruhezustand hängt die Halteplatte 16 im Wesentlichem senkrecht zur Förderrichtung 35, indem sie gemäß Fig. 1 mit einer winkelförmigen Vertiefung 7 der Öse 6 unter Eigengewicht in die Gelenkfassung 42 hineingleitet. Gleichzeitig bleibt die Stabilität des Rollfahrwerks 1 beim Pendeln um die Achse 4 erhalten.

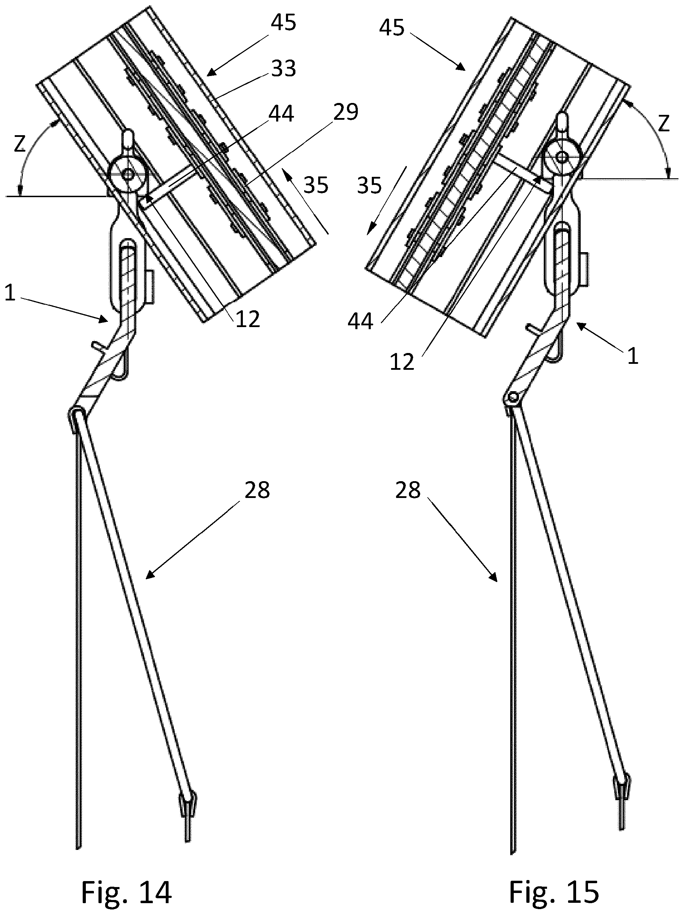

Gemäß Fig. 14 und 15 sind Steilförderer 45 gezeigt, um die Transporttaschen 28 bei Steigungen außerhalb der maximal zulässigen Neigung Y der oberen Kupplung 2 in einem Winkel Z bis mindestens 65° mit dem Antrieb an der unteren Kupplung 12 mit Hilfe der Steigungsmitnehmer 44 hoch und runter zu fahren. Der Steilförderer 45 weist eine Transportschiene 33 mit einem kastenförmigen und symmetrisch ausgebildeten Querschnitt mit Förderelementführungen 31, mit den oberen Begrenzungsstegen 32 für die Rollen 3 und mit Laufstegen 34 für das Rollfahrwerk 1. Die Förderelementführungen 31 nehmen einen Trum des endlosen Förderelements 29 auf. Das Förderelement 29 ist mittels eines nicht dargestellten Elektromotors umlaufend antreibbar und weist vorzugsweise eine kostengünstige handelsübliche Rollenkette mit Steigungsmitnehmern 44 auf, welche vorzugsweise eine breite Mitnehmerfläche aufweisen. Unterhalb der Antriebskette befinden sich in der Transportschiene 33 die in Förderrichtung 35 nach oben angeriebene Transporttaschen 28 und die in Richtung 46 nach unten abgebremsten Transporttaschen 28.

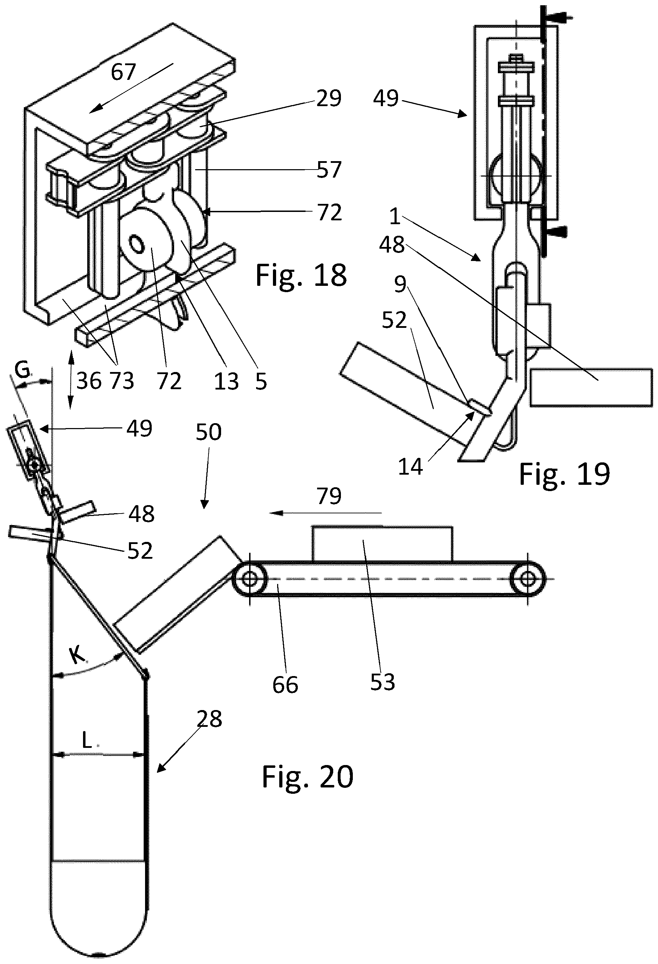

Gemäß Fig. 16 und 17 ist die Beladestation 50 abgebildet. Die Beladestation 50 dient zum Aufstellen und Positionieren der Transporttaschen 28 am Beladetisch 56. Die Transporttaschen 28 werden vorzugsweise mit einem Steilförderer 45 in Richtung 46 auf die Gefälle-Strecke 55 mit der Vereinzelung 47 angeliefert, aus der die Transporttaschen 28 vereinzelt auf den quer zur der Förderrichtung 35 angeordneten Förderer 49 in eine Gleitbewegung in Förderrichtung 67 auf den Gleitflächen 13 des Rollfahrwerks 1 mit Hilfe von seitlichen Mitnehmern 57 auf den Gleitstegen 73 gemäß Fig. 18 versetzt werden. Vorgesehen ist ein stetiges Fördern der Transporttaschen 28 mit Ausnahme der Zeit zum Beladen der Transporttaschen 28 mit dem Fördergut 53. Beim Quertransport im Förderer 49 ist gleichzeitig mindestens eine Transporttasche 28 vorgesehen, vorzugsweise drei, in folgender Zuordnung: Pos.1 - Startposition der leeren Transporttasche 28 aus der Rollbewegung in die Gleitbewegung im Anschluss aus der Gefälle-Strecke 55 in den Förderer 49 in Förderrichtung 67, Pos.2 - Beladeposition vor dem manuellem Beladetisch 56, oder gemäß Fig. 20 vor dem Transportband 66, und Beladen der Transporttasche 28 mit Fördergut 53, Pos.3 - Startposition der beladenen Transporttasche 28 aus der Gleitbewegung in die Rollbewegung in Förderrichtung 35 in die Gefälle-Strecke 51 mit vorzugsweise anschließendem Wegtransport mit einem Steilförderer 45 in Richtung 43. Unter dem Förderer 49 befindet sich gemäß Fig. 16 - 20 die Leiste 52 zum Ausrichten des Beladerahmens 19 auf einen Winkel K mithilfe der Halteplatte 16 und der Führung 9. In Pos. 1 hat die Leiste 52 eine Schräge 54 zur Fixierung der Führung 9 mit der Gleitfläche 14 bei der Aufnahme. Zusätzlich ist vorzugsweise eine Leiste 48 vorgesehen zur sicheren Führung der Transporttasche 28 bei dem Quertransport. Der Winkel K des Beladerahmens 19 wird gemäß Fig. 20 in der Pos. 2 im Bereich des Beladens mit dem Fördergut 53 auf ein Maß von 20° bis 55°, vorzugsweise von 30° bis 45°, besonders bevorzugt von 35° bis 40°, geöffnet. Dies geschieht durch die angewinkelte Positionierung des Förderers 49 inklusive der Leisten 52, 48 auf einen Winkel G gegenüber der Vertikale 36.

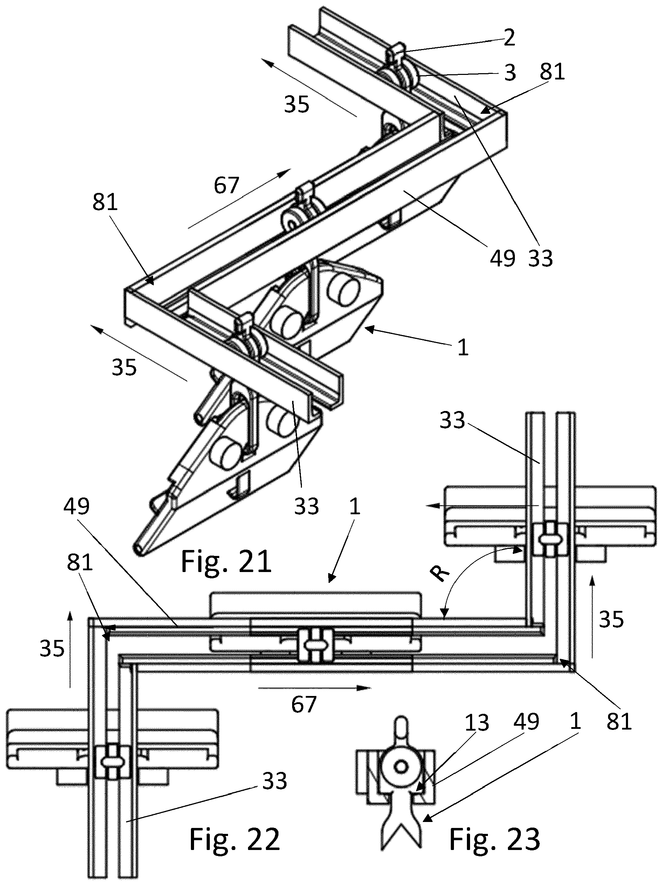

Gemäß Fig. 21 bis 23 sind Quertransport-Weichen 81 zum scharfkantigen Wechseln der Förderrichtung 35 auf einen Winkel von 70° bis 110°, vorzugsweise von 85° bis 95°, besonders bevorzugt auf 90° in Richtung 67, aus der Rollbewegung in die Gleitbewegung und umgekehrt aus der Gleitbewegung in die Rollbewegung abgebildet.

Die Transportschiene 33 wird in einem vorzugsweise 90°-Winkel an die Transportschiene 67 mit den Gleitstegen 73 gemäß Fig. 18 angeschlossen.

Im Winkelbereich wird der Transport von den Rollen 3 auf die Gleitflächen 13 des Rollfahrwerks 1 übernommen. Der Antrieb findet mithilfe des Förderelements 29 mit seitlichen Mittnehmern 57 an der seitlichen Kupplung 72 des Rollfahrwerks 1 statt.

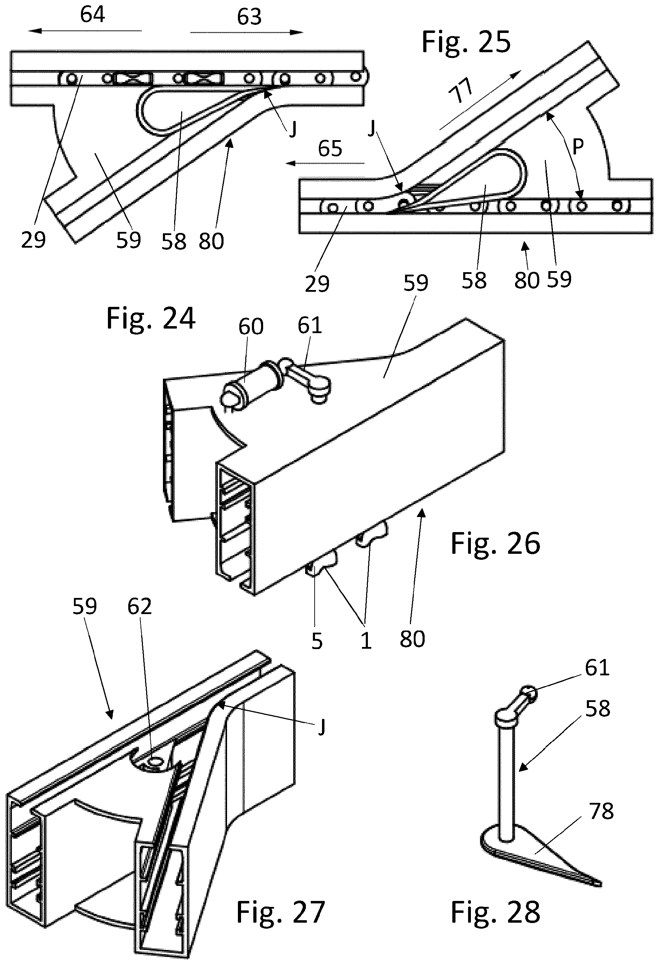

Gemäß Fig. 24 bis 28 wird die Bogenwinkel-Weiche 80 mit einer Winkelverteilung P der Transportbahnen von 20° bis 45°, vorzugsweise von 30° bis 40°, mit einem Radiusübergang J im Winkelbereich dargestellt. Die Bogenwinkel-Weiche 80 besteht im Wesentlichen aus einem Grundkörper 59, einer im Lager 62 eingebauten schaltbaren Weichenzunge 58 mit einer Spitze 78 zum Einschleusen oder Ausschleusen von Transporttaschen 28 in die Förderrichtungen 65, 77, 63, 64 und einem Antrieb 60 zum Umschalten der Förderrichtung. Das Umschalten in Förderrichtung 64, 77 gegen die Weichenzungenspitze 78 erfolgt mit dem Antrieb 60 und in die Richtung 63, 65 vorzugsweise von dem Grundkörper 5 beim angetriebenen Transport des Rollfahrwerks 1 der Transporttasche 28.

Die angewinkelte Seite der Weiche 80 beinhaltet ein hier nicht dargestelltes eigenes Antriebssystem, welches vorzugsweise einen Transmission-Antrieb von dem Förderelement 29 aufweist und im Wesentlichem mit gleicher Geschwindigkeit des Förderelements 29 läuft. Die Schaltung der angetriebenen Bogenwinkel-Weiche 80 wird aus Sicherheitsgründen vorzugsweise zumindest teilweise zusätzlich von den Rollfahrwerken 1 gesteuert, sodass ihre Position vor dem Schalten mit hier nicht dargestellten Sensoren abgefragt wird. Zu der Vermeidung einer Beschädigung und längeren Betriebsausfällen der Förderanlage sind hier nicht dargestellte Sensoren und Montagefenster vorgesehen zum Anhalten der Förderanlage bei Fehlschaltungen der Bogenwinkel-Weichen 80 und mit Möglichkeiten zur schnellen Reparatur bei Bedarf.

## Patentansprüche

1. Transporttasche (28) für eine Förderanlage zur Aufnahme von Fördergut (53) mit
- einer Tragwand (75), welche eine Vorderwand (20), eine Rückwand (24), Seitenwände (26) und eine Bodenwand (23) aufweist, und
- einem mit der Tragwand (75) verbundenen Beladerahmen (19), der eine obere Beschickungsöffnung der Tragwand (75) aufweist zum beabstandeten Anordnen der Vorderwand (20) von der Rückwand (24)
wobei die Transporttasche (28) ein Rollfahrwerk (1) aufweist,
wobei das Rollfahrwerk (1) in einem oberen Bereich nur zwei Rollen (3) enthält, auf welchen es pendelnd in einer Transportschiene (33) gelagert ist,
wobei oberhalb der Rollen (3) das Rollfahrwerk (1) eine obere Kupplung (2) aufweist für eine Übertragung einer Antriebskraft des Förderelements (29), und
wobei am Rollfahrwerk (1) der Beladerahmen (19) angebracht ist, wobei das Rollfahrwerk (1) aus mindestens einem Grundkörper (5) und einer Halteplatte (16) für den Beladerahmen (19) besteht und
wobei der Grundkörper (5) und die Halteplatte (16) miteinander verbunden sind mithilfe eines technischen Gelenks (17), wobei das technische Gelenk (17) mit einer Gelenkfassung (42) im Grundkörper (5) und einem Gelenkelement (82) der Halteplatte (16) gebildet wird, **dadurch gekennzeichnet, dass** das technische Gelenk (17) eine Drehachse (68) und eine Schwenkachse (69) beinhaltet,
wobei entlang einer Ebene durch die Achse (4) der Rollen (3) und die Drehachse (68) das technische Gelenk (17) keine Schwenkachse aufweist, sodass beim Pendeln des Rollfahrwerks (1) um die Achse (4) der Rollen (3) der Grundkörper (5) und die Halteplatte (16) im Wesentlichen wie fest verbunden wirken und durch ein Eigengewicht und eine Länge des Rollfahrwerks (1) ein maximal mögliches Drehmoment um die Achse (4) der Rollen (3) erzeugt wird.

2. Transporttasche nach Anspruch 1, wobei die Transporttasche (28) ein größeres Drehmoment (M1), gegenüber dem Antriebs-Drehmoment (M2), um die Achse (4) der Rollen (3) erzeugt, um ein Überschreiten einer maximal zulässigen Neigung (Y) der oberen Kupplung (2) zu der Vertikalen (36) und des Auseinandergreifens eines Mitnehmers (30) des Förderelementes (29) und der oberen Kupplungen (2) des Rollfahrwerks (1) zu verhindern.

3. Transporttasche (28) nach Anspruch 1 oder 2, **dadurch gekennzeichnet,**
**dass** das Rollfahrwerk (1) mit dem technischen Gelenk (17) eine Schwenkachse (69) aufweist, sodass die Halteplatte (16) in dem Grundkörper (5) pendeln kann und so beim Transport eine Übertragung der entstehenden dynamischen Kräfte auf den Grundkörper (5) und die Rollen (3) verhindert und
**dass** das Rollfahrwerk (1) mit dem technischen Gelenk (17) eine Drehachse (68) aufweist, sodass die Halteplatte (16) eine Rotationsbewegung in dem Grundkörper (5) ausführen kann und so beim Transport eine Übertragung der entstehenden dynamischen Kräfte auf den Grundkörper (5) und die Rollen (3) verhindert, wobei im Ruhezustand die Halteplatte (16) im Wesentlichem senkrecht zu einer Förderrichtung (35) hängt, indem sie mit einer Vertiefung (7) der Öse (6) der Halteplatte (16) unter Eigengewicht in die Gelenkfassung (42) hineingleitet.

4. Transporttasche (28) nach einem der Anspruche 1 bis 3, **dadurch gekennzeichnet,**
**dass** der Grundkörper (5) des Rollfahrwerks (1) unter den Rollen (3) Gleitflächen (13) aufweist zum Wechseln einer Förderrichtung (35) aus einer Rollbewegung quer und scharfkantig auf 70° bis 110°in eine Gleitbewegung und umgekehrt zum Wechseln der Förderrichtung (35) aus der Gleitbewegung quer und scharfkantig in die Rollbewegung.

5. Transporttasche (28) nach einem der Anspruche 1 bis 4, **dadurch gekennzeichnet,**
**dass** der Grundkörper (5) des Rollfahrwerks (1) unter den Rollen (3) beidseitig eine untere Kupplung (12) aufweist, für einen Transport auf Förderstrecken mit Steigungen zu einer waagerechten Position in einem steilen Winkel (Z) bis mindestens 65°.

6. Transporttasche (28) Anspruch 5, **dadurch gekennzeichnet,**
**dass** eine Breite (N) unter den Gleitflächen (13) des Rollfahrwerks (1) bei einem Aufstauen der Transporttaschen (28) eine Öffnung (74) aufweist, ausreichend zum Hineinragen eines Stoppelements (38) einer Vereinzelung (47) oder eines Anhalters (37) zum Sortieren der Transporttaschen (28).

7. Transporttasche (28) nach einem der Anspruche 1 bis 6, **dadurch gekennzeichnet,**
**dass** der Beladerahmen (19) und die Halteplatte (16) des Rollfahrwerks (1) fest und nicht drehbar verbunden sind in einem Winkel (V) gegenüber der Ebene durch die Achse (4) der Rollen (3) und die Drehachse (68) von 5° bis 45°.

8. Transporttasche nach einem der Ansprüche 1 bis 7, **dadurch gekennzeichnet, dass** die Halteplatte (16) winkelartig gegenüber der Ebene durch die Achse (4) der Rollen (3) und der Drehachse (68) ausgebildet ist in einen Winkel (W) von 10° bis 45°.

9. Transporttasche (28) nach Anspruch 7 und 8, **dadurch gekennzeichnet, dass** der Winkel (V) des Beladerahmens (19) gegengerichtet zum Winkel (W) der Halteplatte (16) ausgebildet ist und
dass eine entstehende Tiefe (A) zwischen der Vorderwand (20) und Rückwand (24) der Transporttasche (28) im Wesentlichem ein Maß von (2S) enthält, sodass der Grundkörper (5) eine im Wesentlichem vertikale (36) Position einnimmt und dass die Tiefe (A) der Transporttasche (28) ein Maß von 20 bis 150 mm aufweist und eine manuelle Entladung der Transporttaschen (28) ermöglicht.

10. Transporttasche nach einem der Ansprüche 1 bis 8, **dadurch gekennzeichnet, dass** Datenträger (18) im Rollfahrwerk (1) vorgesehen sind;
dass im Rollfahrwerk (1) Schalldämmungsmittel (71) enthalten sind für einen geräuscharmen Betrieb;
dass das Rollfahrwerk (1) mindestens eine Öse (8) aufweist ist zur Mitnahme von Gegenständen (41);
dass die Halteplatte (16) Anschläge (39) aufweist, um einen Pendelwinkel (X) in dem Grundkörper (5) auf 5° bis 35°zu begrenzen;
dass eine Rotationsbewegung der Halteplatte (16) mit Anschlägen (84) des Grundkörpers (5) begrenzt wird auf einen Rotationswinkel (U) von 10° bis 45°;
dass die Halteplatte (16) des Rollfahrwerks (1) eine Führung (9) mit einer Gleitfläche (14) aufweist zum Ausrichten der Transportasche (28) beim Quertransport auf Gleitflächen (13) und/oder
dass die Tragwand (75) der Transporttasche (28) faltbar in einer Förderrichtung (35) ist und zumindest teilweise aus flexiblem Stoff gebildet ist.

11. Förderanlage
- mit der Transportschiene (33),
- mit einem in der Transportschiene (33) in einer Förderrichtung (35) bewegbar gelagerten Förderelement (29) mit Mitnehmern (30),
- mit mindestens einer in der Transportschiene (33) unterhalb des Förderelements (29) gelagerten Transporttasche (28) nach einem der Ansprüche 1 bis 10.

12. Förderanlage nach Anspruch 11, die ferner aufweist:
- einen Steilförderer (45) zum Fördern der mindestens einen Transporttasche (28) bei Steigungen in einem Winkel (Z) bis mindestens 65° mit einem Antrieb an einer unteren Kupplung (12) des Grundkörpers (5) mit Hilfe eines Steigungsmitnehmers (44);
- eine Staustrecke (70) mit einer Vereinzelung (47) und Anhaltern (37);
- eine Bogenwinkel-Weiche (80) mit einer seitlich an die Transportschiene (33) in einem Winkel (P) angeschlossenen Transportschiene (33) zum Einschleusen oder Ausschleusen der mindestens einen Transporttasche (28);
- eine Quertransport-Weiche (81) zum scharfkantigen Wechseln der Förderrichtung (35) aus einer Rollbewegung in eine Gleitbewegung, sodass der Transport von den Rollen (3) auf Gleitflächen (13) des Rollfahrwerks (1) übertragen wird;
- eine Beladestation (50) bestehend vorzugsweise aus einem Steilförderer (45), einer Gefälle-Strecke (55) mit einer Vereinzelung (47) zur Freigabe der aufgestauten leeren Transporttaschen (28), einem quer zur Förderrichtung (35) angeordneten Förderer (49), einem Beladetisch (56) zum manuellen oder mit einem Transportband (66) Transport des Förderguts (53) in die Transporttasche (28) und einer Gefälle-Strecke (51) mit vorzugsweise an die Gefälle-Strecke (51) angeschlossenen Steilförderer (45); und/oder
- einen Bahnhof für die mindestens eine Transporttasche (28) in einem beladenen Zustand, um das Fördergut (53) auszuladen.

13. Beladestation (50) mit Transporttaschen (28) nach Anspruch 4, 7 und 8, einem Steilförderer (45), einer Gefälle-Strecke (55) mit einer Vereinzelung (47) zur Freigabe der aufgestauten leeren Transporttaschen (28), einem quer zur Förderrichtung (35) angeordneten Förderer (49), einem Beladetisch (56) zum manuellen Beladen der Transporttaschen (28) oder mit einem Transportband (66) zum Transport des Förderguts (53) in die Transporttaschen (28) und einer Gefälle-Strecke (51), **dadurch gekennzeichnet,**
**dass** zum Aufstellen und Positionieren der Transporttasche (28) am Beladetisch (56) oder am Transportband (66) die Transporttasche (28) aus einer Rollbewegung in der Gefälle-Strecke (55) im Anschluss an den quer zur der Förderrichtung (35) angeordneten Förderer (49) in eine Gleitbewegung in einer Förderrichtung (67) auf den Gleitflächen (13) des Rollfahrwerks (1) mithilfe eines Förderelements versetzt werden, und
**dass** ein stetiges Fördern der Transporttaschen (28) mit Ausnahme der Stoppzeit zum Beladen der Transporttaschen (28) mit dem Fördergut (53) vorgesehen ist,
**dass** beim Quertransport im Förderer (49) mindesten eine der Transporttaschen (28)in folgender Zuordnung vorgesehen ist: Position 1, die eine Startposition einer leeren der Transporttaschen (28) aus der Rollbewegung in die Gleitbewegung im Anschluss aus der Gefälle-Strecke (55) in den Förderer (49) in Förderrichtung (67) ist, Position 2, die eine Beladeposition vor dem Beladetisch (56) oder dem Transportband (66) und beladen der mindestens einen der Transporttaschen (28) mit dem Fördergut (53) ist, und eine Position 3, die eine Startposition der mindestens einen der Transporttaschen, (28), die sich in einem beladenen Zustand befindet, aus der Gleitbewegung in die Rollbewegung in Förderrichtung (35) in die Gefälle-Strecke (51),
**dass** eine Leiste (52) unter dem Förderer (49) vorgesehen ist, um die Transporttaschen (28) mit Hilfe der einer Führung (9) der jeweiligen Halteplatte (16) auszurichten und gleichzeitig den jeweiligen Beladerahmen (19) auf einen Winkel (K) zu öffnen, und
**dass** in der Beladeposition der Förderer (49) inklusive der Leiste (52) auf einen Winkel (G) ausgerichtet ist, um einen Winkel (K) des Beladerahmens (19) zu erzeugen, der größer als der Winkel (V) ist und dass der Winkel (K) ein Maß von 20° bis 55°aufweist.

## Claims

1. A transport bag (28) for a conveyor system for receiving conveying good (53) with
- a support wall (75) which has a front wall (20), a rear wall (24), side walls (26) and a bottom wall (23), and
- a loading frame (19) which is connected to a support wall (75) and has an upper feeding opening of the support wall (75) for arranging the front wall (20) spaced apart from the rear wall (24),
wherein the transport bag (28) has a roller chassis (1), and
wherein the roller chassis (1) comprises only two rollers (3) in an upper region, on which the roller chassis (1) is supportable in a swinging manner in a transport rail (33),
wherein, above the rollers (3), the roller chassis (1) has an upper coupling (2) for transmission of a drive force by a conveying element (29), and
wherein the loading frame (19) is attached to the roller chassis (1), wherein the roller chassis (1) consists of at least one base body (5) and a holding plate (16) for the loading frame (19), and
wherein the base body (5) and the holding plate (16) are connected to one another with the aid of a technical joint (17),
wherein the technical joint (17) is formed by way of the joint socket (42) in the base body (5) and a joint element (82) of the holding plate (16), **characterized in that** the technical joint (17) includes a rotational axle (68) and a swiveling axle (69),
the technical joint (17) not having any swiveling axle along a plane through the axle (4) of the rollers (3) and the rotational axle (68), so that, in the case of swinging of the roller chassis (1) about the axle (4) of the rollers (3), the base body (5) and the holding plate (16) act substantially as if connected fixedly, and a maximum possible torque about the axle (4) of the rollers (3) is generated by dead weight and length of the roller chassis (1).

2. The transport bag as claimed in claim 1, wherein the transport bag (28) generates, during acceleration and deceleration of the transport bad (28), a substantially greater torque (M1) about the axle (4) of the rollers (3), in comparison with a drive torque (M2), in order to prevent exceeding of a maximum permissible tilt (Y) of the upper coupling (2) with respect to the vertical (36) and disengaging of a driver (30) of the conveying element (29) and the upper couplings (2) of the roller chassis (1) so that reliable carry along of the transport bag (28) arises.

3. The transport bag (28) as claimed in claim 1 or 2, **characterized**
**In that** the roller chassis (1) with the technical joint (17) has the rotational axle (69), so that the holding plate (16) can swing in the base body (5) and thus prevents, during transport, transmission of the arising dynamic forces to the base body (5) and the rollers (3), and
**in that** the roller chassis (1) with the technical joint (17) has the swiveling axle (68), so that the holding plate (16) is enabled to carry out a rotational movement in the base body (5) and thus prevents, during transport, the transmission of the arising dynamic forces which to the base body (5) and the rollers (3), the holding plate (16) hanging substantially perpendicularly with respect to a conveying direction (35) in the rest state, the holding plate (16) sliding a depression (7) of the eyelet (6) of the holding plate (16) under its own weight into the joint socket (42).

4. The transport bag (28) as claimed in one of claims 1 to 3, **characterized in that** the base body (5) of the roller chassis (1) has sliding surfaces (13) below the rollers (3) for changing conveying direction from a rolling movement transversely and sharply to 70° to 110° into a sliding movement and conversely for changing the conveying direction from the sliding movement transversely and sharply into the rolling movement.

5. The transport bag (28) as claimed in one of claims 1 to 4, **characterized**
**in that** the base body (5) of the roller chassis (1) has a lower coupling (12) on both sides below the rollers (3) for transport on conveying paths with gradients, relative to a horizontal position, at a steep angle (Z) of up to at least 65°.

6. The transport bag (28) as claimed in claim 5, **characterized**
**in that** width (N) below the sliding surfaces (13) of the roller chassis (1), when the transport bags (28) are backed up, has an opening (74) sufficient for a stopping element (38) of a separation (47), or stopper (37), to protrude through for sorting the transport bags (28).

7. The transport bag (28) as claimed in one of claims 1 to 6, **characterized**
**in that** the loading frame (19) and the holding plate (16) of the roller chassis (1) are connected fixedly and non-rotatably at an angle (V) with respect to the plane through the axle (4) of the rollers (3) and the rotational axle (68) of 5° to 45°.

8. The transport bag as claimed in one of claims 1 to 7, **characterized**
**in that** the holding plate (16) is formed angle-like with respect to the plane through the axle (4) of the rollers (3) and the rotational axle (68) at an angle (W) of 10° to 45°.

9. The transport bag (28) as claimed in claims 7 and 8, **characterized in that** the angle (V) of the loading frame (19) is formed oppositely to the angle (W) of the holding plate (16), and
**in that** an arising depth (A) between the front wall (20) and the rear wall (24) of the transport bag (28) contains substantially a dimension of (2S), so that the base body (5) assumes a substantially vertical (36) position, and
**in that** the depth (A) of the transport pocket (28) has a dimension of 20 to 150 mm, and allows manual unloading of the transport bags (28).

10. The transport bag as claimed in one of claims 1 to 8, **characterized**
**in that** data carrier (18) is provided in the roller chassis (1);
**in that** sound insulation means (71) are contained in the roller chassis (1) for low-noise operation;
**in that** the roller chassis (1) has at least one eyelet (8) for driving objects (41);
**in that** the holding plate (16) has stops (39) in order to limit a swinging angle (X) in the base body (5) to 5° to 35°;
**in that** the rotational movement of the holding plate (16) is delimited by way of stops (84) of the base body (5) to a rotational angle (U) of 10° to 45°;
**in that** the holding plate (16) of the roller chassis (1) has a guide (9) with a sliding surface (14) for aligning the transport bag (28) during transverse transport on the sliding surfaces (13); and/or
**in that** the support wall (75) of the transport bag (28) is foldable in a conveying direction (35) and is formed at least partially from flexible fabric.

11. A conveyor system
- with the transport rail (33),
- with a conveying element (29) supported movably in a conveying direction (35) in the transport rail (33) with drivers (30),
- with at least one transport bag (28) as claimed in any of claims 1 to 10, which is supported in the transport rail (33) below the conveying element (29).

12. The conveyor system as claimed in claim 11 further comprising:
- an inclined conveyor (45) for conveying the at least one transport bag (28) in the case of gradients at an angle (Z) of up to at least 65° with a drive to the lower coupling (12) of the main body (5) with the aid of a gradient driver (44);
- accumulating paths (70) with separation (47) and a stopper (37);
- an arc-angle switch (80) with transport rails (33) which are connected at an angle (P) laterally to the transport rail (33) in order to insert or remove the at least one transport bag (28);
- a transverse-transport switch (81) for sharp changing of the conveying direction from rolling movement into sliding movement, so that the transport is transferred from the rollers (3) onto sliding surfaces (13) of the roller chassis (1);
- a loading station (50) consisting preferably of an inclined conveyor (45), a descent path (55) with a separation (47) for releasing the backed-up empty transport bags (28), a conveyor (49) which is arranged transversely with respect to the conveying direction (35), a loading table (56) for transporting the conveying good (53) manually or by way of a transport belt (66) into the transport bag (28), and a descent path (51) with inclined conveyors (45) which are preferably connected to the descent path (51); and/or
- a station for the at least one transport bag (28) in a loaded state for unloading the conveying good (53).

13. A loading station (50) including an inclined conveyor (45), a descent path (55) with a separation (47) for releasing the backed-up empty transport bags (28), a conveyor (49) which is arranged transversely with respect to the conveying direction (35), a loading table (56) for transporting the conveying good (53) manually or by way of a transport belt (66) into the transport bag (28), and a descent path (51), **characterized**
**in that**, in order to set up and position the transport bags (28) on the loading table (56) or the transport belt (68), the transport bags (28) are transferred out of rolling movement in the descent path (55) following the conveyor (49) which is arranged transversely with respect to the conveying direction (35) into a sliding movement in a conveying direction (67) on the sliding surfaces (13) of the rolling chassis (1) with the aid of a conveying element, and
**in that** continuous conveying of the transport bags (28) is provided with the exception of the stop time for loading the transport bags (28) with the conveying good (53), and
**in that**, during transverse transport, at the least one transport bags (28) is provided in the conveyor (49), in the following assignment: position 1 which is a start position of an empty transport bag (28) out of the rolling movement into the sliding movement following the descent path (55) into the conveyor (49) in the conveying direction (67), position 2 which is a loading position upstream of the loading table (56), or the transport belt (66), and loading of the least one transport bag (28) with the conveying good (53), and a position 3 which is a start position of the at least one transport bag (28), which is in loaded state, out of the sliding movement into the rolling movement in the conveying direction (35) into the descent path (51),
**in that** a bar (52) is provided below the conveyor (49) for aligning the transport bags (28) with the aid of the guide (9) of the respective holding plate (16) and at the same time opening of the respective loading frame (19) to an angle (K), and
**in that** in the loading position the conveyor (49) including the bar (52) is aligned to an angle (G) in order to produce an angle (K) of the loading frame (19) greater than the angle (V), and in that the angle (K) has a dimension of 20° to 55°.

## Revendications

1. Sac de transport (28) pour une installation de convoyage pour recevoir des produits à convoyer (53) avec
- une paroi de support (75), qui présente une paroi avant (20), une paroi arrière (24), des parois latérales (26) et une paroi de fond (23), et
- un cadre de chargement (19) relié à la paroi de support (75), qui présente une ouverture d'alimentation supérieure de la paroi de support (75) pour agencer la paroi avant (20) à distance de la paroi arrière (24)
le sac de transport (28) présentant un châssis roulant (1),
le châssis roulant (1) ne contenant dans une zone supérieure que deux rouleaux (3) sur lesquels il est monté de manière oscillante dans un rail de transport (33),
au-dessus des rouleaux (3), le châssis roulant (1) présentant un accouplement supérieur (2) pour une transmission d'une force d'entraînement de l'élément de convoyage (29), et le cadre de chargement (19) étant disposé sur le châssis roulant (1), le châssis roulant (1) étant constitué d'au moins un corps de base (5) et d'une plaque de retenue (16) pour le cadre de chargement (19) et
le corps de base (5) et la plaque de retenue (16) étant reliés l'un à l'autre à l'aide d'une articulation technique (17), l'articulation technique (17) étant formée avec une monture d'articulation (42) dans le corps de base (5) et un élément d'articulation (82) de la plaque de retenue (16), **caractérisé en ce que** l'articulation technique (17) comporte un axe de rotation (68) et un axe de pivotement (69),
le long d'un plan passant par l'axe (4) des rouleaux (3) et l'axe de rotation (68), l'articulation technique (17) ne présentant pas d'axe de pivotement, de telle sorte que, lors de l'oscillation du châssis roulant (1) autour de l'axe (4) des rouleaux (3), le corps de base (5) et la plaque de retenue (16) agissent essentiellement comme s'ils étaient fermement reliés et un couple maximal possible autour de l'axe (4) des rouleaux (3) est produit par un poids propre et une longueur du châssis roulant (1).

2. Sac de transport selon la revendication 1, le sac de transport (28) produisant un couple plus important (M1), par rapport au couple d'entraînement (M2), autour de l'axe (4) des rouleaux (3) afin d'empêcher un dépassement d'une inclinaison maximale autorisée (Y) de l'accouplement supérieur (2) par rapport à la verticale (36) et l'écartement d'un entraîneur (30) de l'élément de convoyage (29) et des accouplements supérieurs (2) du châssis roulant (1).

3. Sac de transport (28) selon la revendication 1 ou 2, **caractérisé en ce que** le châssis roulant (1) avec l'articulation technique (17) présente un axe de pivotement (69), de telle sorte que la plaque de retenue (16) peut osciller dans le corps de base (5) et empêche ainsi, lors du transport, une transmission des forces dynamiques qui se produisent sur le corps de base (5) et les rouleaux (3) et **en ce que** le châssis roulant (1) avec l'articulation technique (17) présente un axe de rotation (68), de telle sorte que la plaque de retenue (16) peut effectuer un mouvement de rotation dans le corps de base (5) et empêche ainsi, lors du transport, une transmission des forces dynamiques qui se produisent sur le corps de base (5) et les rouleaux (3), la plaque de retenue (16) étant suspendue, à l'état de repos, essentiellement perpendiculairement à une direction de convoyage (35), par le fait qu'elle glisse sous son propre poids dans la monture d'articulation (42) par un renfoncement (7) de l'œillet (6) de la plaque de retenue (16).

4. Sac de transport (28) selon l'une quelconque des revendications 1 à 3, **caractérisé en ce que**
le corps de base (5) du châssis de roulement (1) présente des surfaces de glissement (13) sous les rouleaux (3) pour changer une direction de convoyage (35) d'un mouvement de roulement transversalement et à angle vif à 70° à 110° en un mouvement de glissement et inversement pour changer la direction de convoyage (35) du mouvement de glissement transversalement et à angle vif en le mouvement de roulement.

5. Sac de transport (28) selon l'une quelconque des revendications 1 à 4, **caractérisé en ce que**
le corps de base (5) du châssis roulant (1) présente sous les rouleaux (3) des deux côtés un accouplement inférieur (12), pour un transport sur des voies de convoyage avec des pentes vers une position horizontale selon un angle à forte pente (Z) allant jusqu'à au moins 65°.

6. Sac de transport (28) selon la revendication 5, **caractérisé en ce qu'**une largeur (N) sous les surfaces de glissement (13) du châssis roulant (1) présente, lors d'une accumulation des sacs de transport (28), une ouverture (74) suffisante pour y faire pénétrer un élément d'arrêt (38) d'un séparateur (47) ou un arrêtoir (37) pour trier les sacs de transport (28).

7. Sac de transport (28) selon l'une quelconque des revendications 1 à 6, **caractérisé en ce que**
le cadre de chargement (19) et la plaque de retenue (16) du châssis roulant (1) sont reliés de manière fixe et non rotative selon un angle (V) par rapport au plan passant par l'axe (4) des rouleaux (3) et l'axe de rotation (68) de 5° à 45°.

8. Sac de transport selon l'une quelconque des revendications 1 à 7, **caractérisé en ce que** la plaque de retenue (16) est réalisée de manière angulaire par rapport au plan passant par l'axe (4) des rouleaux (3) et l'axe de rotation (68) selon un angle (W) de 10° à 45°.

9. Sac de transport (28) selon les revendications 7 et 8, **caractérisé en ce que** l'angle (V) du cadre de chargement (19) est réalisé en sens inverse de l'angle (W) de la plaque de retenue (16) et
**en ce qu'**une profondeur (A) résultante entre la paroi avant (20) et la paroi arrière (24) du sac de transport (28) contient essentiellement une dimension de (2S), de telle sorte que le corps de base (5) occupe une position essentiellement verticale (36), et **en ce que** la profondeur (A) du sac de transport (28) présente une dimension de 20 à 150 mm et permet un déchargement manuel des sacs de transport (28).

10. Sac de transport selon l'une quelconque des revendications 1 à 8, **caractérisé en ce que** des supports de données (18) sont prévus dans le châssis roulant (1) ;
**en ce que** des moyens d'insonorisation (71) sont contenus dans le châssis roulant (1) pour un fonctionnement silencieux ;
**en ce que** le châssis roulant (1) présente au moins un oeillet (8) pour l'entraînement d'objets (41) ;
**en ce que** la plaque de retenue (16) présente des butées (39) pour limiter un angle d'oscillation (X) dans le corps de base (5) à 5° à 35° ;
**en ce qu'**un mouvement de rotation de la plaque de retenue (16) avec des butées (84) du corps de base (5) est limité à un angle de rotation (U) de 10° à 45° ;
**en ce que** la plaque de retenue (16) du châssis roulant (1) présente un guide (9) avec une surface de glissement (14) pour orienter le sac de transport (28) lors du transport transversal sur des surfaces de glissement (13) et/ou
**en ce que** la paroi de support (75) du sac de transport (28) est pliable dans une direction de convoyage (35) et est formée au moins partiellement d'une matière flexible.

11. Installation de convoyage
- avec le rail de transport (33),
- avec un élément de convoyage (29) monté dans le rail de transport (33) de manière mobile dans une direction de convoyage (35) avec des entraîneurs (30),
- avec au moins un sac de transport (28) selon l'une quelconque des revendications 1 à 10, monté dans le rail de transport (33) en dessous de l'élément de convoyage (29).

12. Installation de convoyage selon la revendication 11, qui présente en outre :
- un convoyeur à forte pente (45) pour convoyer l'au moins un sac de transport (28) sur des pentes selon un angle (Z) allant jusqu'à au moins 65° avec un entraînement sur un accouplement inférieur (12) du corps de base (5) à l'aide d'un entraîneur de pente (44) ;
- une section d'accumulation (70) avec un séparateur (47) et des arrêtoirs (37) ;
- un aiguillage à angle courbe (80) avec un rail de transport (33) raccordé latéralement au rail de transport (33) selon un angle (P) pour l'introduction ou l'évacuation de l'au moins un sac de transport (28) ;
- un aiguillage de transport transversal (81) pour le changement à angle vif de la direction de convoyage (35) d'un mouvement de roulement à un mouvement de glissement, de telle sorte que le transport est transféré des rouleaux (3) à des surfaces de glissement (13) du châssis roulant (1) ;
- une station de chargement (50) constituée de préférence d'un convoyeur à forte pente (45), d'une section en pente (55) avec un séparateur (47) pour libérer les sacs de transport vides accumulés (28), d'un convoyeur (49) agencé transversalement à la direction de convoyage (35), d'une table de chargement (56) pour le transport manuel ou avec une bande transporteuse (66) des produits à convoyer (53) dans le sac de transport (28) et une section en pente (51) avec un convoyeur à forte pente (45) de préférence raccordé à la section en pente (51) ; et/ou
- une gare pour l'au moins un sac de transport (28) dans un état chargé, afin de décharger le produit à convoyer (53).

13. Station de chargement (50) avec des sacs de transport (28) selon les revendications 4, 7 et 8, un convoyeur à forte pente (45), une section en pente (55) avec un séparateur (47) pour libérer les sacs de transport vides accumulés (28), un convoyeur (49) agencé transversalement à la direction de convoyage (35), une table de chargement (56) pour le chargement manuel des sacs de transport (28) ou avec une bande transporteuse (66) pour le transport du produit à convoyer (53) dans les sacs de transport (28) et une section en pente (51), **caractérisée en ce que**
pour la mise en place et le positionnement du sac de transport (28) sur la table de chargement (56) ou sur la bande transporteuse (66), le sac de transport (28) est déplacé d'un mouvement de roulement dans la section en pente (55) à la suite du convoyeur (49) agencé transversalement à la direction de convoyage (35) en un mouvement de glissement dans une direction de convoyage (67) sur les surfaces de glissement (13) du châssis roulant (1) à l'aide d'un élément de convoyage, et
**en ce qu'**il est prévu un convoyage continu des sacs de transport (28) à l'exception du temps d'arrêt pour le chargement des sacs de transport (28) avec le produit à convoyer (53), **en ce que**, lors du transport transversal dans le convoyeur (49), au moins l'un des sacs de transport (28) est prévue dans l'affectation suivante : une position 1, qui est une position de départ d'un des sacs de transport (28) vides du mouvement de roulement au mouvement de glissement à la suite de la section en pente (55) dans le convoyeur (49) dans la direction de convoyage (67), une position 2, qui est une position de chargement avant la table de chargement (56) ou la bande transporteuse (66) et de chargement de l'au moins un des sacs de transport (28) avec le produit à convoyer (53), et une position 3, qui est une position de départ de l'au moins un des sacs de transport (28), qui se trouve dans un état chargé, à partir du mouvement de glissement vers le mouvement de roulement dans la direction de convoyage (35) dans la section en pente (51),
**en ce qu'**une barre (52) est prévue sous le convoyeur (49) pour orienter les sacs de transport (28) à l'aide du guide (9) de la plaque de retenue (16) respective et pour ouvrir simultanément le cadre de chargement (19) respectif sur un angle (K), et
**en ce que**, dans la position de chargement, le convoyeur (49), y compris la barre (52), est orienté selon un angle (G) afin de produire un angle (K) du cadre de chargement (19) qui est supérieur à l'angle (V) et **en ce que** l'angle (K) présente une dimension de 20° à 55°.
